# DEMANDE DE BREVET EUROPEEN

(11) **EP 3 584 553 A1**
(43) Date de publication de la demande: **25.12.2019**
(21) Numéro de dépôt: 19157755.0
(22) Date de dépôt: 18.02.2019
(51) Int. Cl.: G01K 1/14, G01K 13/02

(54) **SYSTEME DE MESURE DE LA TEMPERATURE D'UN FLUIDE CIRCULANT DANS UNE CONDUITE**

(30) Priorité: 27.02.2018 FR 1870210
(71) Demandeur: AKWEL, 01410 Champfromier (FR)
(72) Inventeur: FERNANDES, Thomas, 34070 MONTPELLIER (FR); DREUX, Jérémy, 95630 MERIEL (FR); PUJOL, Olivier, 84000 AVIGNON (FR)

(57) **Abrégé**

Le système (10) comprend une sonde thermique (12) comprenant un élément thermosensible, un corps plongeur (40), étanche au fluide, conformé pour envelopper totalement l'élément thermosensible de la sonde (12), un support de sonde (50) comprenant deux orifices (52, 54) de raccordement du système (10) à ladite conduite, reliés par un canal interne (56) s'étendant sensiblement axialement selon une direction principale d'écoulement du fluide dans ledit support (50) et comprenant une ouverture radiale (66) par laquelle le corps plongeur (40) est destiné à être au moins partiellement plongé à l'intérieur du canal interne (56). Plus particulièrement, le canal interne (56) est délimité par une paroi tubulaire (62) ayant une surface interne (64) comprenant une dépression (70) localisée en regard de l'ouverture afin de limiter les pertes de charge singulières du fluide susceptibles d'être générées par la présence du corps plongeur (40) dans le fluide en définissant un trajet d'écoulement du fluide autour du corps plongeur (40).

## Description

La présente invention se rapporte à un système de mesure de la température d'un fluide circulant dans une conduite par exemple une conduite d'un circuit d'un véhicule automobile. La présente invention s'applique en particulier à la mesure au moyen d'une sonde de température de la température d'un fluide circulant par exemple dans un circuit de refroidissement ou un circuit d'admission d'air et plus spécifiquement dans un circuit d'alimentation en carburant de type essence ou diesel.

De façon classique, une sonde de température est pourvue d'un élément thermosensible connecté à deux fils de sortie électriquement conducteurs. Cet élément thermosensible est par exemple du type à résistance électrique sensible à la température, généralement entourée d'une couche de revêtement en époxy ou en verre suivant la technologie de la résistance électrique qui peut être soit du type CTN (Coefficient de Température Négatif) soit du type CTP (Coefficient de température Positif).

Généralement, dans les circuits d'alimentation en carburant de véhicule automobile, il est souhaitable d'éviter la mise en contact direct de l'élément thermosensible avec le fluide notamment à cause de risques de corrosion de l'élément, de pollution du carburant par des matières constituant l'élément thermosensible, telles que par exemple des résidus de soudure ou encore à cause de risques électriques. Il est ainsi connu de recouvrir l'élément thermosensible par un fourreau de protection, parfois appelé plongeur. Ce fourreau est généralement muni d'un prolongement en forme de doigt de gant logeant l'élément thermosensible. L'élément thermosensible ainsi entouré par ce prolongement peut pénétrer aussi loin que possible dans le fluide dont on veut mesurer la température, ce qui permet une mesure fiable de la température effective du fluide. Ce fourreau est souvent réalisé dans un matériau plastique ou métallique et assemblé par sertissage, par clippage ou encore directement intégré au corps de connecteur.

Afin de faciliter la prise de mesure dans une telle conduite, on a déjà proposé un raccord en forme générale de T à insérer entre deux tronçons de la conduite, ce raccord comportant une ouverture ménagée sur sa paroi tubulaire par laquelle la sonde de température pénètre dans la veine de fluide à contrôler.

Toutefois, et en particulier dans le cas des circuits d'alimentation en carburant dont la section de passage de la conduite de fluide est très réduite, le doigt de gant, lorsqu'il est positionné dans le passage du fluide, encombre la conduite et réduit la section de passage de fluide en générant des perturbations dans la circulation de fluide, notamment par une perte de charges importante.

L'invention a pour but de remédier à ces inconvénients et de proposer un système de mesure permettant au corps plongeur d'être plongé au cœur de l'écoulement du fluide afin d'en optimiser la fiabilité de mesure de température tout en limitant les perturbations dans cet écoulement.

A cet effet, l'invention a pour objet un système pour la mesure de la température d'un fluide circulant dans une conduite, ledit système comprenant :
- une sonde thermique comprenant un élément thermosensible,
- un corps plongeur, étanche au fluide, conformé pour envelopper totalement l'élément thermosensible de la sonde,
- un support de sonde comprenant deux orifices de raccordement du système à ladite conduite, reliés par un canal interne s'étendant sensiblement axialement selon une direction principale d'écoulement du fluide dans ledit support et comprenant une ouverture radiale par laquelle le corps plongeur est destiné à être au moins partiellement plongé à l'intérieur du canal interne,
**caractérisé en ce que** le canal interne est délimité par une paroi tubulaire ayant une surface interne comprenant une dépression localisée en regard de l'ouverture afin de limiter les pertes de charge singulières du fluide susceptibles d'être générées par la présence du corps plongeur dans le fluide en définissant un trajet d'écoulement du fluide autour du corps plongeur de telle sorte que l'écoulement du fluide rencontrant le corps plongeur est dévié dans le relief creux de la dépression pour contourner entièrement le corps plongeur.

Au sens de la présente invention, une dépression est un relief tel qu'un enfoncement ou un creux formé en surface interne de la paroi tubulaire.

De façon connue en soi, des pertes de charge dans l'écoulement dans un fluide sont des chutes de pression dues à la résistance que rencontrent les fluides en écoulement. En particulier, on distingue les pertes de charge dites « linéiques » ou « régulières » qui correspondent aux pertes liées à l'écoulement le long des conduites et les pertes de charge dites « singulières » qui se manifestent sur des pièces spécifiques de conduite en modifiant la direction ou la section de passage du fluide. La présence du corps plongeur dans la section de passage du canal interne constitue un obstacle qui est susceptible de provoquer des pertes de charge singulières.

Grâce à la dépression, l'écoulement du fluide peut se faire autour du corps plongeur afin de limiter les pertes de charge singulières. La fonction de cette région en dépression est de faciliter la circulation du fluide autour du corps plongeur afin d'une part de limiter les pertes de charge singulières et d'autre part de favoriser l'échange thermique avec le fluide. En effet, la présence de la dépression permet d'immerger complètement l'extrémité du corps plongeur au cœur de la veine de fluide à contrôler, l'écoulement du fluide rencontrant le corps plongeur, et en particulier son extrémité, étant dévié dans le relief creux de la dépression pour contourner le corps plongeur autour de son extrémité.

Un système de détermination de la température peut comporter l'une ou l'autre des caractéristiques de l'invention suivantes.

Par exemple, la dépression est formée par une cuvette de forme générale sensiblement hémisphérique.

De préférence, dans lequel le corps plongeur s'étend à l'extérieur et au droit de la dépression.

De préférence, la paroi tubulaire présente sur une surface externe un relief en forme de demi-coque sphérique délimitant la dépression du canal interne.

De préférence, la surface externe comprend une nervure de rigidification périphérique s'étendant au moins autour de la demi-coque sphérique.

Dans un mode de réalisation préféré, le support de sonde a une forme générale de T comprenant une pluralité de branches définissant un nœud d'embranchement et une structure de rigidification du nœud d'embranchement comprenant une pluralité de pièces de rigidification associées à chacune des branches.

Par exemple, la structure de rigidification a une forme générale de U.

Dans un mode de réalisation préféré, la sonde comprend un corps de forme générale tubulaire en matériau plastique et au moins deux languettes de contact partant en saillie d'une extrémité proximale de ce corps sur lesquelles sont fixées des bornes de sortie de l'élément thermosensible, formé de préférence d'une thermistance.

Dans un mode de réalisation préféré, le corps de la sonde est surmoulé sur les languettes de contact ou les languettes sont montées en force à l'intérieur du corps de sonde.

De préférence, le support de sonde comprend un manchon tubulaire s'étendant radialement vers l'extérieur depuis l'ouverture radiale pour former une tête d'assemblage de la sonde de température au support de sonde.

De préférence, la tête d'assemblage présentant une embouchure comprend un emplacement périphérique d'un joint d'étanchéité torique à proximité de son embouchure.

De préférence, la tête d'assemblage et la sonde comprennent des moyens d'assemblages complémentaires, par exemple du type à encliquetage, sertissage, soudage, le corps plongeur étant interposé entre la tête et la sonde.

De préférence, le corps plongeur est indépendant de la sonde et du support de sonde et est interposé entre le support de sonde et la sonde.

En dissociant les fonctions de support, de corps plongeur et de sonde, le système peut être produit en grande série avec un procédé simple et robuste car les trois éléments du système sont très simples de conception et donc très simples à fabriquer.

En outre, le fait de disposer le corps plongeur dans une pièce séparée permet d'aménager beaucoup plus simplement la dépression dans le support de sonde pour permettre par exemple la conservation d'une section de passage constante pour le fluide et pour permettre par exemple de conserver une section de passage constante pour le fluide et de compenser la perte de section liée à la présence du corps plongeur. Ceci ne pourrait pas être réalisé avec un support de sonde qui intégrerait le corps plongeur directement par exemple par injection plastique, car la pièce serait alors très difficile à démouler.

De préférence, le système comprend des moyens d'étanchéité formés par un bourrelet d'extrémité du corps plongeur.

De préférence, l'élément thermosensible comprend une tête thermosensible et le corps plongeur comprend une cavité terminale conformée pour épouser la forme de la tête thermosensible.

Dans un mode de réalisation préféré, le corps plongeur comprend un corps de forme générale tubulaire ouvert à une extrémité et se prolongeant à l'autre extrémité en un embout tronconique se terminant en une calotte globalement sphérique conformée pour loger la tête sensible de l'élément thermosensible.

De préférence, le corps plongeur comprend une extrémité distale ouverte surépaissie pour former une lèvre d'étanchéité, le corps plongeur étant réalisé dans un matériau élastomère.

D'autres caractéristiques et avantages de l'invention apparaîtront à la lumière de la description qui suit, faite en référence aux dessins annexés dans lesquels :
- la figure 1 est une vue en perspective éclatée de trois quarts avant d'un système de détermination de la température selon un premier mode de réalisation de l'invention ;
- la figure 2 représente une vue en perspective et écorché partiel du système de la figure 1 ;
- la figure 3 représente une vue en coupe III-III du système selon un plan médian passant par des axes du système de détermination de la température selon le premier mode de réalisation de l'invention ;
- la figure 4 représente une vue en perspective d'une sonde de température du système de la figure 1 ;
- la figure 5 est vue en perspective d'un support de sonde du système de la figure 1 ;
- la figure 6 est une vue en écorché partiel du support de sonde de la figure 5 ;
- la figure 7 représente une vue en coupe d'un système de détermination de la température selon un deuxième mode de réalisation de l'invention ;
- la figure 8 représente une vue en perspective d'un corps plongeur du système de détermination de la figure 7.

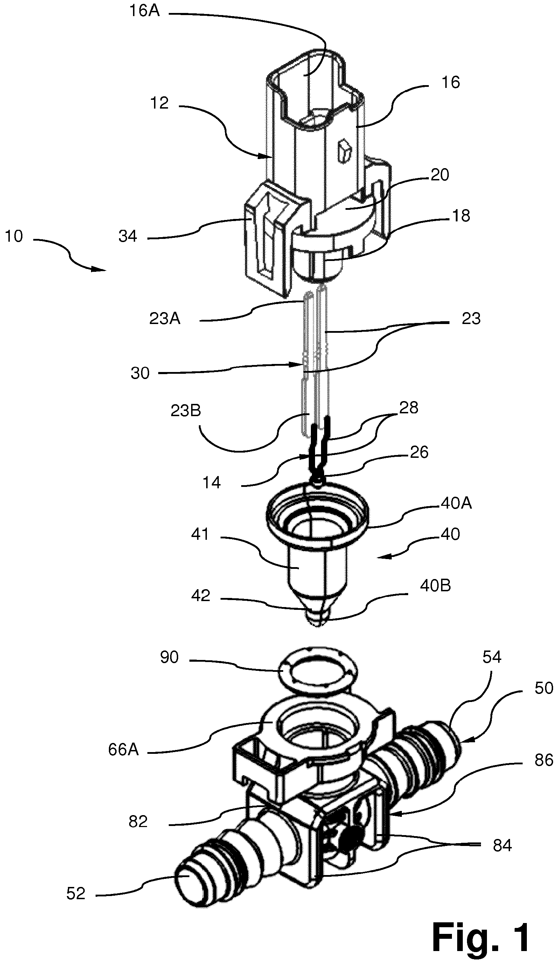

On a représenté de façon schématique sur **les** **figures 1 à 3** un système de détermination de la température selon l'invention. Ce système est désigné par la référence générale 10. Ce système 10 est destiné à être monté sur une conduite (non représentée) dans laquelle circule un fluide. Par exemple, la conduite est une conduite d'un circuit d'un véhicule automobile, telle qu'une conduite de circulation d'un carburant.

Le système 10 est par exemple destiné à être raccordé à une de ses extrémités à un tronçon de conduite aval alimentant le système 10 en fluide et à une autre de ses extrémités à un tronçon de conduite amont pour évacuer le fluide. A cet effet, la conduite peut être équipée de moyens de raccordement appropriés.

En référence aux **figures 1 à 3****,** le système 10 comprend notamment une sonde de température 12 pour la détermination d'une température du fluide circulant dans la conduite. Comme cela est illustré en détail sur **la** **figure 1****,** la sonde thermique 12 comprend un élément thermosensible 14, tel que par exemple une thermistance.

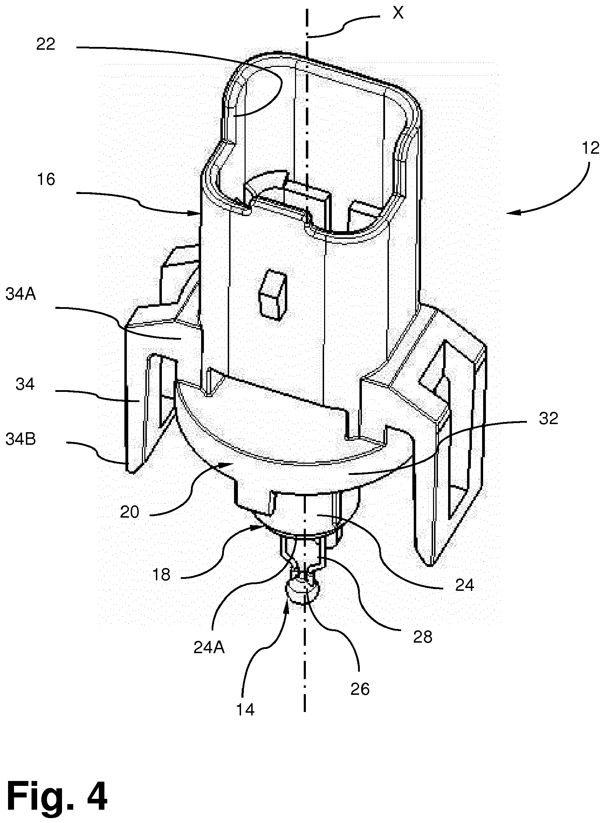

De préférence, en référence à **la** **figure 4****,** la sonde 12 comprend un corps de forme générale tubulaire s'étendant longitudinalement selon un axe X et comprend au moins une portion 16 d'extrémité distale de connexion électrique et une portion 18 d'extrémité proximale de prise de mesure. Dans cet exemple, la sonde 12 comprend également une portion intermédiaire 20 s'étendant entre la portion distale 16 et la portion proximale 18 destinée à être fixée à un support détaillé ci-après.

Au sens de la présente description, un élément sera qualifié de proximal ou de distal selon qu'il est proche ou éloigné axialement de la zone de prise de mesure.

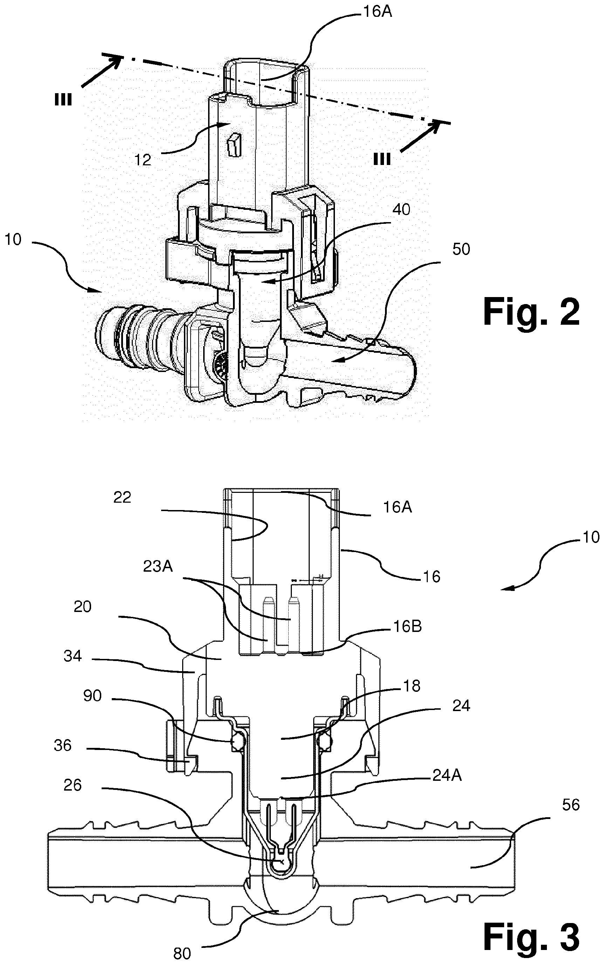

De préférence, la portion distale de connexion 16 est conformée pour permettre le raccordement électrique du système de mesure 10 avec un circuit électrique externe tel que par exemple une unité de contrôle électrique du véhicule automobile (non représentée). Dans cet exemple, la portion distale de connecteur 16 se présente sous la forme d'un corps creux 22 de forme générale tubulaire ouvert à une extrémité distale 16A et présentant à une extrémité proximale fermée 16B au moins un élément connecteur électrique 23A faisant saillie à l'intérieur du corps 22 pour former une prise (visible sur **la** **figure 3**). Le corps creux 22 est par exemple conformé pour coopérer avec un élément de connexion électrique (non représenté) raccordé électriquement à l'unité de contrôle électrique du véhicule automobile.

En outre, comme cela est visible sur **la** **figure 4****,** la portion de prise de mesure 18 est formée par un embout tubulaire 24 de forme générale cylindrique muni d'une face frontale 24A à partir de laquelle s'étend l'élément thermosensible 14.

Dans l'exemple décrit et de préférence, l'élément thermosensible 14 comprend une tête thermosensible 26 supportée par deux fils de sortie 28 électriquement conducteurs et connectés à la tête 26 d'un même côté de cette dernière. La tête 26 présente un premier côté auquel sont connectés les fils de sortie 28 et un deuxième côté formant son extrémité libre, en l'espèce de forme arrondie. Les deux fils 28 de préférence sont rigides ou semi-rigides pour remplir vis-à-vis de la tête 26 une fonction de support structural, la tête 26 n'étant maintenue que par les fils 28.

Cet élément thermosensible 14 est par exemple une résistance électrique sensible à la température, du type CTN (sigle pour « Coefficient de Température Négatif ») soit du type CTP (sigle pour « Coefficient de Température Positif »), cette résistance électrique pouvant être entourée d'une couche de revêtement, par exemple en époxy ou en verre.

Les deux portions distale 16 et proximale 18 sont par exemple reliées électriquement entre elles par des moyens de connexion électrique 30. A cet effet, les moyens de connexion électrique 30 comprennent des broches métalliques 23 s'étendant axialement entre la portion distale 16 et la portion proximale 18. Ces broches 23 sont formées par des languettes de contact métalliques qui peuvent être surmoulées dans le corps de la sonde de température 12 ou encore montées en force à l'intérieur du corps de la sonde de température 12 de telle sorte que l'extrémité distale 23A des languettes de contact est accessible depuis l'intérieur du logement creux de la partie de connecteur pour former les broches 23 et que l'extrémité proximale 23B fait saillie à partir de la face frontale 24A de l'embout proximal 24 pour être raccordé à l'élément thermosensible 14.

De préférence, dans l'exemple décrit, le corps de la sonde 12 est réalisé par exemple dans une matière plastique rigide ou semi-rigide. Par exemple, le corps de la sonde 12 est réalisé dans un matériau polymère tel que par exemple un polyamide aliphatique choisi dans le groupe consistant en PA6, PA66, PA11, PA12, et/ou les mélanges et/ou copolyamides de ceux-ci ou encore un thermoplastique choisi parmi le polyétheréthercétone (PEEK), le polybutylène-téréphtalate (PBT) ou encore un polyphthalamide (PPA) ou encore le polysulfure de phénylène (PPS). Il pourra être chargé en fibres de verre, charges minérales ou tout autre charge permettant d'atteindre les caractéristiques mécaniques, de résistance ou de stabilité dimensionnelle requises.

En outre, dans cet exemple, l'élément thermosensible 14 est assemblé sur l'extrémité proximale 23B des languettes de contact 23. Par exemple, les fils de sortie 28 de l'élément thermosensible 14 sont connectés par soudure électrique ou à ultrasons directement sur les broches 23 de la sonde de mesure 12 au moyen par exemple de deux points de soudure électrique ou à ultrasons avec un point de soudure par fil de sortie.

Ainsi les lames ou broches 23 supportent les fils de sortie 28 et donc l'élément thermosensible 14 qui se retrouve à distance, porté en porte-à-faux de l'embout proximal 24 de la portion de prise de mesure 18 de la sonde 12.

Dans cet exemple, l'élément thermosensible 14 comprend, par exemple, une thermistance du type à Coefficient de Température Négatif, ou du type à Coefficient de Température Positif, ou du type à éléments en platines PT100 ou PT1000. La tête 26 est connectée électriquement aux deux fils 28 qui sont reliés électriquement à la partie formant connecteur 16 du support de sonde 12 par les lames ou broches de contact métallique 23 pour la transmission des signaux de mesure. Plus précisément en l'espèce, et de manière connue, la tête 26 fait partie d'un circuit électrique dans lequel on mesure la résistance à ses bornes, dont on déduit la température du fluide, puisque la résistance de la tête 26 dépend directement de la température à laquelle elle est exposée c'est-à-dire, puisqu'elle est disposée dans la zone d'écoulement principal du fluide, de la température de fluide.

La portion intermédiaire 20 de fixation de la sonde 12 comprend dans cet exemple une embase 32 formant un épaulement avec l'embout de prise de mesure 24. Cette embase 32 a une forme générale de disque. La portion intermédiaire 20 comprend également dans cet exemple au moins deux pattes 34 élastiquement déformables s'étendant sensiblement parallèlement à l'axe longitudinal X de la sonde 12 et diamétralement opposées par rapport à l'axe X. Chaque patte d'encliquetage 34 comprend à son extrémité proximale 34B libre un ergot 36 faisant saillie vers l'intérieur (**figure 3**). Comme cela est visible notamment sur **les** **figures 1****,** **3** **et** **4****,** les pattes d'encliquetage 34 sont par ailleurs ajourées. Dans l'exemple illustré, les pattes d'encliquetage 34 ont une forme générale rectangulaire présentant une ouverture centrale rectangulaire. Les pattes d'encliquetage 34 comprennent chacune une extrémité distale 34B montée et fixée sur l'embase 32.

Lorsque la sonde de température 12 est engagée à l'intérieur d'une conduite de circulation de fluide, l'embout de prise de mesure 18 est destiné à être inséré dans une ouverture d'accès à la veine de fluide afin d'en contrôler la température au moyen de l'élément thermosensible 14.

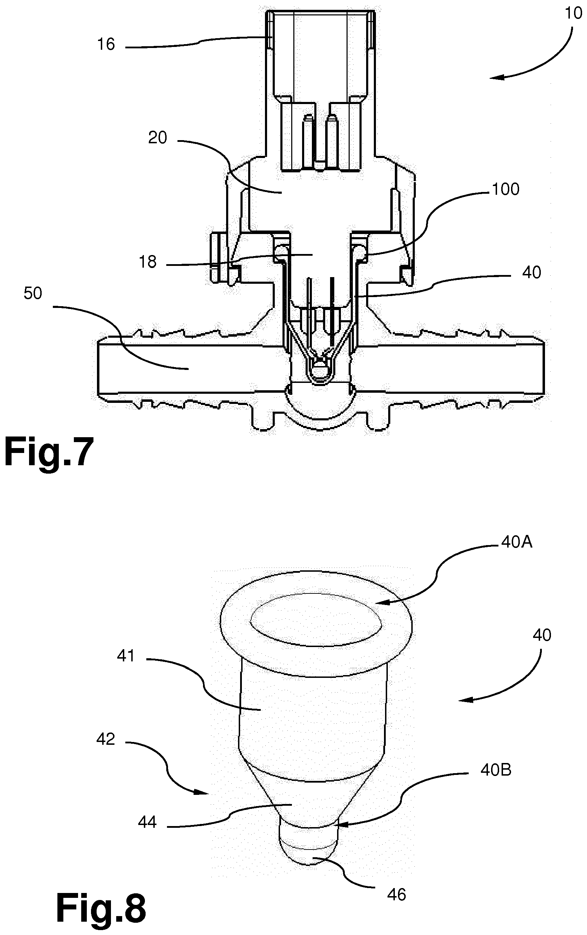

Selon l'invention, l'élément thermosensible 14 est isolé du fluide contenu dans la conduite par un corps plongeur 40 illustré en détail sur **la** **figure 8****.** Le corps plongeur 40 est conformé pour envelopper totalement l'élément thermosensible 14 de la sonde 12. Ce corps plongeur 40 est réalisé de préférence dans un matériau métallique ou dans une matière plastique. De préférence, le corps plongeur 40 est réalisé en matière plastique.

Par exemple, le corps plongeur 40 est réalisé dans un matériau polymère rigide ou semi-rigide tel que par exemple un polyamide aliphatique choisi dans le groupe consistant en PA6, PA66, PA11, PA12, et/ou les mélanges et/ou copolyamides de ceux-ci ou encore un thermoplastique choisi parmi le polyétheréthercétone (PEEK), le polybutylène-téréphtalate (PBT) ou encore un polyphthalamide (PPA) ou encore le polysulfure de phénylène (PPS). Il pourra être chargé en fibres de verre, en charges minérales. En particulier, ces charges peuvent améliorer la conduction thermique du thermoplastique, telles que des charges de graphique. En variante, le corps plongeur peut être réalisé en matériau tel que de l'acier inoxydable ou de l'aluminium.

De préférence, dans l'exemple décrit, le corps plongeur 40 comprend un corps 41 de forme générale tubulaire ouvert à une première extrémité distale 40A et se prolongeant vers une deuxième extrémité proximale 40B en un embout tronconique 44 se terminant en une calotte 46 globalement sphérique pour loger la tête sensible 26 de l'élément thermosensible 14 délimitant le logement terminal 42. Le corps tubulaire 41 est destiné à venir envelopper l'embout 24 de la sonde 12 et l'embout tronconique 44 est destiné à loger les fils de connexion électrique 28 de l'élément thermosensible 14.

Avec cette conformation, le prolongement tronconique du corps plongeur 40 pénètre aussi loin que possible dans le fluide dont on veut mesurer la température ce qui permet une mesure fiable de la température effective du fluide.

Eventuellement, afin notamment d'améliorer le couplage thermique, l'élément thermosensible 14 est logé à l'intérieur du prolongement tronconique du corps plongeur 40 avec une masse coulée thermo-conductrice. En plus de l'amélioration du couplage en température, cette matière a pour fonction de maintenir la tête sensible 26 de l'élément thermosensible 14 pendant le montage. La masse coulée est par exemple une pâte thermo-conductrice. En effet, afin de limiter les contacts entre l'élément thermosensible 26 et la paroi interne du corps plongeur 40 tout en améliorant le couplage thermique, le corps plongeur 40 est de préférence généralement rempli par une pâte thermique d'enrobage afin d'immobiliser la thermistance et combler les vides entre l'élément sensible 14 et la paroi interne du corps plongeur 40.

Le système 10 comprend encore un support de sonde 50 pour recevoir le fluide circulant dans la conduite dont on souhaite contrôler la température. Ce support de sonde 50 est formé, comme on le voit sur **les** **figures 1** **et** **2** et plus en détail sur **la** **figure 3** d'une tubulure principale.

Dans cet exemple, le support de sonde 50 comprend deux orifices 52 et 54 de raccordement du système 10 à ladite conduite, reliés par un canal interne 56 s'étendant axialement selon une direction principale d'écoulement du fluide.

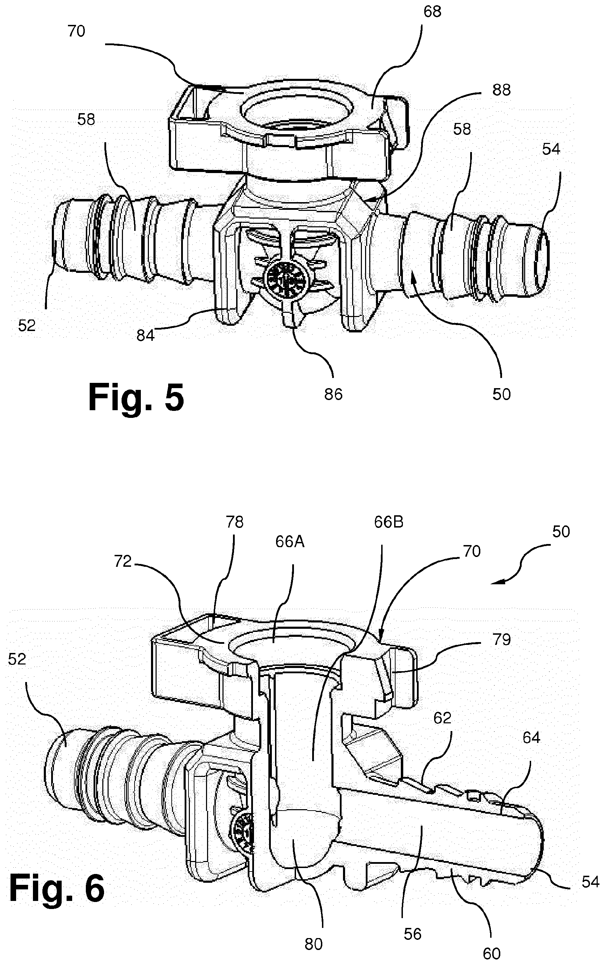

Ce support de sonde 50 comprend dans l'exemple illustré par **les** **figures 5 et 6****,** deux embouts tubulaires 58 à l'extrémité desquels se situent les extrémités de raccordement 52 et 54 à la conduite. Ces embouts tubulaires 58 sont dans cet exemple crantés pour faciliter le raccordement fluidique à la conduite principale (non représentée). Le canal interne 56 est dans l'exemple décrit délimité par une paroi tubulaire 60 présentant une surface externe 62 et une surface interne 64.

Le support de sonde 50 comprend selon l'invention une ouverture radiale proximale 66B débouchant à l'intérieur du canal interne 56. Le corps plongeur 40 est destiné à être au moins partiellement plongé à l'intérieur du canal interne 56 au travers de cette ouverture proximale 66B.

Le support de sonde 50 est muni sur sa surface extérieure d'un manchon 68 par exemple de forme générale cylindrique s'étendant radialement vers l'extérieur depuis l'ouverture radiale 66B pour former une tête d'assemblage 70 de la sonde de température 12 et du corps plongeur 40 au support de sonde 50 délimitant une ouverture radiale distale 66A.

Cette tête d'assemblage 70 est de préférence munie de moyens de centrage et/ou de fixation complémentaires de la sonde de température 16 au support de sonde 50. Les moyens de fixation complémentaires de la sonde 12 et du support de sonde 50 peuvent faire l'objet de nombreuses variantes de réalisation. De préférence, dans l'exemple décrit, les moyens de fixation complémentaires comprennent des moyens d'encliquetage élastique.

A cet effet, de préférence, la tête d'assemblage 70 comprend à son embouchure une collerette 72 faisant saillie radialement à partir de son contour d'ouverture distale 66A. Cette collerette 72 comprend de préférence une fente 78 de réception d'une des pattes d'encliquetage pour la recevoir de manière élastique et une encoche 79 de réception pour recevoir l'autre des pattes d'encliquetage. On comprendra bien que ces moyens de fixation peuvent comprendre d'autres formes sans sortir du cadre de l'invention.

Plus particulièrement, le canal interne 56 comprend sur la surface interne 64 de sa paroi 60 une dépression 80 localisée en regard de l'ouverture 66 de passage de la sonde 16 afin de limiter les pertes de charge singulières du fluide susceptibles d'être générées par la présence du corps plongeur en définissant un trajet d'écoulement du fluide autour du corps plongeur 40.

Afin de limiter ces pertes, l'invention propose ainsi de conformer le canal interne 56 d'écoulement en formant une dépression 80 au droit de l'ouverture radiale 66B par laquelle le corps plongeur 40 vient plonger.

De préférence et comme cela est illustré sur **la** **figure 3****,** la dépression 80 est formée par une cuvette de forme générale sensiblement hémisphérique. La dépression 80 confère dans l'exemple illustré par exemple en **figure 3** à la surface externe du support de sonde 50 un aspect bombé sur sa surface externe. De préférence, la dépression 80 comprend une section axiale en forme générale d'arc de cercle.

Dans le mode de réalisation illustré sur les figures, dans lequel le corps plongeur 40 s'étend à l'extérieur et au droit de la dépression 80. En outre, comme cela est illustré **en** **figure 3****,** une extrémité inférieure du corps plongeur 40 s'étend sensiblement dans une position centrée axialement à l'intérieur du canal interne 56.

Par ailleurs, dans l'exemple décrit, le support de sonde 50 a une forme générale de T comprenant une pluralité de branches formée par la tête de mesure 70 et les deux embouts tubulaires 58. Cette pluralité de branches définit un nœud 82 d'embranchement comprenant une pluralité de pièces de rigidification 84 associées à chacune des branches. Par exemple la pluralité de pièces de rigidification 84 forme une structure de rigidification 88 s'étendant localement à l'embranchement 82.

Dans l'exemple illustré, la structure de rigidification 88 a une forme générale de U délimitant des ailes de rigidification 84 sur chacune des branches conformées en paroi plane. Par ailleurs, la région du support de sonde comprenant la dépression 80 s'étend à l'intérieur du nœud d'embranchement 82. Par exemple, la structure de rigidification comprend en outre dans cet exemple une nervure centrale 86 s'étendant sur tout le pourtour externe de la zone de dépression 80 du support 50.

En outre, comme cela est visible sur **les** **figures 1 à 6** illustrant le premier mode de réalisation, le système de mesure 10 comprend en outre un joint torique d'étanchéité 90. Ce joint torique 90 est destiné à être inséré à l'intérieur d'une gorge annulaire formée dans une paroi interne de la collerette 72 de la tête d'assemblage 70, comme cela est visible sur **la** **figure 3****.** Par ailleurs, le corps plongeur 40 présente dans ce mode de réalisation une extrémité distale 40A destinée à être fixée axialement à l'intérieur de la partie intermédiaire 20. Le corps plongeur 40 délimite avec le support de sonde 50 la gorge annulaire pour recevoir le joint d'étanchéité 90. En outre, le corps plongeur peut comporter des espaces périphériques de logement d'au moins un joint d'étanchéité. Comme cela est illustré **en** **figure 1****,** le corps plongeur 40 est pourvu au niveau de l'extrémité distale 40A extérieurement d'un épaulement annulaire dans lequel est ménagée une gorge ou rainure périphérique. En outre, dans l'exemple illustré, l'extrémité distale 40A du corps plongeur 40 est muni d'un prolongement axial destiné à coopérer avec le support de sonde 50 et la sonde 12 pour être retenu à l'intérieur de la sonde 12 par exemple dans une fente axiale complémentaire périphérique.

On a représenté sur **les** **figures 7 et 8** un système de détermination selon un deuxième mode de réalisation. Dans ce deuxième mode de réalisation, les éléments analogues à ceux du premier mode de réalisation portent des références identiques.

Dans ce deuxième mode de réalisation, le corps plongeur 40 est réalisé dans une matière élastomère tel que par exemple :
- du fluorosilicone par exemple dans le cas d'une sonde destinée à mesurer la température dans des circuits de carburants ;
- du caoutchouc EPDM (sigle de éthylène-propylène-diène monomère) par exemple dans le cas d'un circuit de refroidissement ou de SCR,
- encore d'autres matières polymères par exemple du NBR (« nitrile butadiene rubber » en anglais), des caoutchoucs nitriles hydrogénés (sigle HNBR, « hydrogenated nitrile butadiene rubber » en anglais), les élastomères fluorés de type FKM (« fluorine rubber » en anglais), l'éthylène acrylate de méthyle (AEM).

Dans le cas de l'utilisation d'un élastomère, la pression interne au circuit de fluide peut alors permettre d'appliquer la matière souple du corps plongeur contre l'élément thermosensible 14 de la sonde 12 et le recours à une pâte thermique peut dans ce cas être superflu.

En outre, afin d'évacuer l'air contenu dans le corps plongeur, la sonde 12 pourra comprendre de préférence un évent d'aération. Ainsi, la sonde 12 pourra comprend un petit orifice formant canal d'aération. Eventuellement, en variante, la sonde peut être dépourvue d'évent, l'air peut alors se comprimer et son volume à l'intérieur du corps plongeur peut être fortement réduit.

On notera qu'en fonction de la conception du corps plongeur 40, de la matière et des épaisseurs utilisées, le recours à une matière élastomère pour réaliser le corps plongeur peut en variante permettre de réaliser l'étanchéité directement par le corps plongeur sans recourir à des joints additionnels. Il est possible d'assurer cette fonction d'étanchéité en jouant sur la géométrie et les épaisseurs de matière. La compression du corps plongeur 40 en interposition entre le support de sonde 50 et la sonde 12 permet de garantir l'étanchéité de manière radiale et/ou axiale.

A cet effet, comme illustré en **figure 8****,** le corps plongeur 40 comprend à son extrémité distale 40A un bourrelet périphérique 100 autour de son ouverture 40A pour former un joint d'étanchéité intégré au corps plongeur 40.

On va maintenant décrire les principaux aspects de fonctionnement d'un système de détermination selon les deux modes de réalisation de l'invention.

Lors de la prise de température, le support de sonde 50 est rapporté sur une conduite de circulation d'un fluide en raccordant les deux tronçons de la conduite sur les embouts de raccordement 58 prévus à cet effet sur le support de sonde 50. Le corps plongeur 40 logeant à son extrémité proximale 40B l'élément thermosensible 14 est positionné de telle sorte que l'extrémité proximale 40B s'étende au centre du trajet d'écoulement du fluide afin d'obtenir des mesures de température fiables. Les perturbations induites par la présence du corps plongeur 40 dans le trajet d'écoulement du fluide sont limitées grâce au support de sonde 40 selon l'invention. En effet, la zone en dépression 80 du support de sonde 50 permet au fluide de contourner le corps plongeur 40 et de limiter ainsi les pertes de charge.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Système (10) pour la mesure de la température d'un fluide circulant dans une conduite, ledit système (10) comprenant :
- une sonde thermique (12) comprenant un élément thermosensible (14),
- un corps plongeur (40), étanche au fluide, conformé pour envelopper totalement l'élément thermosensible (14) de la sonde (12),
- un support de sonde (50) comprenant deux orifices (52, 54) de raccordement du système (10) à ladite conduite, reliés par un canal interne (56) s'étendant sensiblement axialement selon une direction principale d'écoulement du fluide dans ledit support (50) et comprenant une ouverture radiale (66) par laquelle le corps plongeur (40) est destiné à être au moins partiellement plongé à l'intérieur du canal interne (56),
**caractérisé en ce que** le canal interne (56) est délimité par une paroi tubulaire (62) ayant une surface interne (64I) comprenant une dépression (80) localisée en regard de l'ouverture (66) afin de limiter les pertes de charge singulières du fluide susceptibles d'être générées par la présence du corps plongeur (40) dans le fluide en définissant un trajet d'écoulement du fluide autour du corps plongeur (40) de telle sorte que l'écoulement du fluide rencontrant le corps plongeur est dévié dans le relief creux de la dépression (80) pour contourner entièrement le corps plongeur (40).

2. Système (10) selon la revendication précédente, dans lequel la dépression (80) est formée par une cuvette de forme générale sensiblement hémisphérique.

3. Système (10) selon l'une quelconque des revendications précédentes, dans lequel le corps plongeur (40) s'étend à l'extérieur et au droit de la dépression (80).

4. Système (10) selon l'une ou l'autre des revendications précédentes, dans lequel la paroi tubulaire (62) présente sur une surface externe (64E) un relief en forme de demi-coque sphérique délimitant la dépression (80) du canal interne (56).

5. Système (10) selon la revendication précédente, dans lequel la surface externe est pourvue d'une nervure de rigidification périphérique s'étendant au moins autour de la demi-coque sphérique.

6. Système (10) selon l'une quelconque des revendications précédentes, dans lequel le support de sonde (50) a une forme générale de T comprenant une pluralité de branches (70, 58) définissant un nœud d'embranchement (82) et une structure de rigidification du nœud d'embranchement (82) comprenant une pluralité de pièces (84) de rigidification associées à chacune des branches (70, 58).

7. Système (10) selon la revendication précédente, dans lequel la structure de rigidification a une forme générale de U.

8. Système (10) selon l'une quelconque des revendications précédentes, dans lequel la sonde (50) comprend un corps de forme générale tubulaire en matériau plastique et au moins deux languettes (23) de contact partant en saillie d'une extrémité proximale de ce corps sur lesquelles sont fixées des bornes de sortie (28) de l'élément thermosensible (14), formé de préférence d'une thermistance.

9. Système (10) selon la revendication précédente, dans lequel le corps de la sonde (12) est surmoulé sur les languettes (23) de contact ou les languettes (23) sont montées en force à l'intérieur du corps de sonde.

10. Système (10) selon l'une quelconque des revendications précédentes, dans lequel le support de sonde (50) comprend un manchon tubulaire (68) s'étendant radialement vers l'extérieur depuis l'ouverture radiale (66) pour former une tête d'assemblage (70) de la sonde de température au support de sonde.

11. Système (10) selon la revendication précédente, dans lequel la tête d'assemblage (70) présentant une embouchure (72) comprend un emplacement périphérique d'un joint d'étanchéité torique à proximité de son embouchure (72).

12. Système (10) selon la revendication 9 ou 10, dans lequel la tête d'assemblage et la sonde comprennent des moyens de fixation complémentaires, par exemple du type à encliquetage.

13. Système (10) selon l'une quelconque des revendications précédentes, dans lequel le corps plongeur (40) est indépendant de la sonde (12) et du support de sonde (50) et est rapporté entre le support de sonde (50) et la sonde (12).

14. Système (10) selon l'une quelconque des revendications précédentes, comprenant des moyens d'étanchéité formés par un bourrelet d'extrémité du corps plongeur.

15. Système (10) selon l'une quelconque des revendications précédentes, dans lequel l'élément thermosensible (14) comprend une tête thermosensible (26) et le corps plongeur (40) comprend une cavité terminale conformée pour épouser la forme de la tête thermosensible (26).

16. Système (10) selon la revendication précédente, dans lequel le corps plongeur (40) comprend un corps de forme générale tubulaire ouvert à une extrémité et se prolongeant à l'autre extrémité en un embout tronconique se terminant en une calotte globalement sphérique conformée pour loger la tête sensible de l'élément thermosensible (14).

17. Système (10) selon l'une quelconque des revendications précédentes, dans lequel le corps plongeur (40) comprend une extrémité distale ouverte surépaissie pour former une lèvre d'étanchéité, le corps plongeur (40) étant réalisé dans un matériau élastomère.
